# EUROPÄISCHE PATENTSCHRIFT

(11) **EP 2 546 838 B1**
(45) Veröffentlichungstag und Bekanntmachung des Hinweises auf die Patenterteilung: **28.09.2016**
(21) Anmeldenummer: 12004845.9
(22) Anmeldetag: 29.06.2012
(51) Int. Cl.: F28D 15/02, G21C 19/07, G21C 19/08, F28D 21/00

(54) **Lagerbeckenkühlmodul**
Storage pool cooling module
Module de refroidissement d'un bassin de stockage

(30) Priorität: 09.07.2011 DE 102011107000
(43) Veröffentlichungstag der Anmeldung: 16.01.2013
(73) Patentinhaber: Westinghouse Electric Germany GmbH, 68167 Mannheim (DE)
(72) Erfinder: Freis, Daniel, 68259 Mannheim (DE); Sassen, Felix, 68239 Mannheim (DE); Tietsch, Wolfgang, 68309 Mannheim (DE)
(74) Vertreter: Fritsch, Klaus

(56) Entgegenhaltungen:
- DE-B1- 2 823 376
- JP-A- H02 223 896
- SU-A1- 1 188 501

## Beschreibung

Die Erfindung betrifft ein Lagerbeckenkühlmodul, umfassend wenigstens einen Thermosiphon mit einem Verdampfer und einem Kondensator.

Es ist allgemein bekannt, dass in kerntechnischen Stromerzeugungsanlagen als nuklearer Brennstoff vorzugsweise uranhaltige Brennelemente verwendet werden. Diese haben - je nach Reaktortyp - eine zumeist stabähnliche Form, wobei bei einem typischen Druckwasserreaktor von 1200 MW Leistung für eine Kernladung etwa 190 derartiger Brennelemente benötigt werden. Diese sind nach deren jeweiligem Abbrand durch neue zu ersetzen, je nach Nutzungsweise eines Kernreaktors pro Jahr etwa 20% aller Brennelemente.

Hierzu werden die jeweiligen Brennelemente mittels einer entsprechenden roboterähnlichen Vorrichtung dem innerhalb eines Reaktorschutzgebäudes angeordneten Reaktorkern entnommen und in ein benachbartes Brennelementlagerbecken, ein sogenanntes Abklingbecken, umgesetzt und dort zwischengelagert. Auch wenn die Brennelemente derart abgebrannt sind, dass sie nicht mehr in dem Reaktor verwendet werden können, weisen sie dennoch anfangs eine nicht unerhebliche Nachzerfallsleistung auf, welche mit einer entsprechenden Wärmeerzeugung verbunden ist, die durchaus im MW Bereich liegt.

Um das Bedienpersonal bzw. die Umgebung vor den dabei auftretenden radioaktiven Strahlen zu schützen und um zugleich eine Wärmeabfuhr von den zwischengelagerten Brennelementen sicher zu stellen, ist das Brennelementlagerbecken bzw. das Abklingbecken mit Wasser gefüllt, so dass die eigentliche Brennelementlagerstelle am Fuße des Abklingbeckens seitlich und nach oben von einigen Metern Wasser umgeben ist.

Zu Wartungszwecken des Reaktors wird bedarfsweise sogar die gesamte Kernladung an Brennelementen im Abklingbecken zwischengelagert, so dass eine Zugänglichkeit des Reaktorkerns gewährleistet ist. Je nach Lagerstand fallen im Abklingbecken daher Wärmeleistungen von 10MW und höher an, welche das in ihm befindliche Wasser innerhalb weniger Stunden zum Kochen bringen können, was jedoch aus Sicherheitsgründen zu verhindern ist.

Daher verfügen Abklingbecken über Kühlsysteme, welche die entstehende Wärmeleistung über Wärmetauscher einer Wärmesenke zuführen, also einem Bereich oder einer Einrichtung, die Wärme abnehmen kann.

Aufgrund unvorhersehbarer Ereignisse wie beispielsweise einem Erdbeben kann trotz höchster Sicherheitsmaßnahmen nicht völlig ausgeschlossen werden, dass ein derartiges Kühlsystem für ein Brennelementelagerbecken ausfällt, auch wenn dies höchst unwahrscheinlich ist. In diesem Fall würde sich das Wasser im Abklingbecken beziehungsweise im Lagerbecken im Laufe der Zeit, beispielsweise mehrerer Stunden oder auch Tage, aufgrund fehlender Kühlwirkung derart erhitzen, dass es verdampft, und es im Extremfall zu einer Beschädigung oder einem Schmelzen der gelagerten Brennelemente kommen kann.

Das Patentdokument SU 1188501 A offenbart ein Sammelbecken für radioaktives Wasser mit einer Vielzahl von Thermosiphons, wobei die Wasseroberfläche des Sammelbeckens zur Reduktion von Wasserverlusten mit einer Vielzahl von Schwimmplatten abgedeckt ist. Das Patentdokument JP H02 223896 A offenbart ein Lagerbecken mit fest installierten Thermosiphons, welche vom Inneren des Lagerbeckens durch die Wandung eines dieses umgebenden Gebäudes geführt sind. In ähnlicher Weise offenbart das Patentdokument DE 28 23 376 B1 ein Lagerbecken mit in dieses ragenden Thermosiphons, deren andere Enden in einem Abzugskamin münden.

Ausgehend von diesem Stand der Technik ist es Aufgabe der Erfindung, Mittel für eine zusätzliche Kühlleistung in Brennelementelagerbecken bereitzustellen, welche - insbesondere auch bedarfsweise in einem Störungsfall - problemlos in ein Brennelementelagerbecken einzubringen sind und eine zusätzliche Kühlung des in diesem befindlichen Wassers bewirken.

Diese Aufgabe wird gelöst durch ein Lagerbeckenkühlmodul der eingangs genannten Art. Dieses ist dadurch gekennzeichnet, dass dieses weiterhin wenigstens einen Schwimmkörper umfasst, welcher unterhalb des Kondensators angeordnet und derart ausgestaltet ist, dass das erfindungsgemäße Lagerbeckenkühlmodul in Wasser schwimmfähig ist, wobei der Verdampfer dann unterhalb der Wasseroberfläche und der Kondensator oberhalb der Wasseroberfläche befindlich ist.

Durch die Schwimmfähigkeit des erfindungsgemäßen Lagerbeckenkühlmoduls ist eine einfache und problemlose nachträgliche Einbringung desselben in ein Lagerbecken ermöglicht. Während beim normalen Betrieb eines Lagerbeckens die Wasseroberfläche aus Zugänglichkeitsgründen frei zugänglich sein muss, besteht diese Notwendigkeit in einem Notfall beim eventuellen Ausfall der vorgesehenen Kühlsysteme nicht. Die Kernbrennstäbe sind üblicherweise mehrere Meter unterhalb der Wasseroberfläche befindlich, so dass eine Kollision der schwimmenden Lagerbeckenkühlmodule mit den gelagerten Kernbrennstäben dann nicht erfolgt. Deshalb ist darauf zu achten, dass der Tiefgang der Lagerbeckenkühlmodule so gewählt ist, dass ein sicherer vertikaler Abstand zu den gelagerten Kernbrennstäben gewährleistet ist. So ist beispielsweise ein maximaler Tiefgang von 1 m bis 3m eine geeignete Größe. Auf der anderen Seite bedeutet ein höherer Tiefgang letztendlich auch eine erhöhte Kontaktfläche des Lagerbeckenkühlmoduls mit dem zu kühlenden Wasser und damit auch eine erhöhte Kühlwirkung, so dass der Tiefgang prinzipiell möglichst hoch zu wählen ist. Eine eventuelle Schwankung des Wasserpegels wird durch die schwimmenden Lagerbeckenkühlmodule in vorteilhafter Weise ausgeglichen.

Entsprechend ist die Grundfläche des Lagerbeckenkühlmoduls derart zu wählen, dass eine einfache Handhabung beziehungsweise Abseilung in das Lagerbecken beispielsweise mittels eines Krans oder auch mittels eines Hubschraubers gewährleistet ist. Eine geeignete Grundfläche ist beispielsweise 1,5m x 1,5m bis 3m x 3m. Das Gewicht eines Lagerbeckenkühlmoduls sollte demgemäß einige wenige 1000kg nicht überschreiten. Durch den erfindungsgemäßen Aufbau eines Lagerbeckenkühlmoduls lässt sich dieses modular einsetzten und die summarische Kühlleistung genau auf den jeweiligen Kühlbedarf anpassen.

Eine weitere wesentliche Eigenschaft eines erfindungsgemäßen Lagerbeckenkühlmoduls ist die Verwendung eines Thermosiphons. Dieser weist nämlich einen geschlossenen Kühlkreislauf auf, wobei mittels eines darin zirkulierenden Kühlmittels von einer Wärmequelle - in diesem Fall dem Wasser des Lagerbeckens - Wärmeenergie aufgenommen wird und an eine geodätisch darüber liegende Wärmesenke - in diesem Fall die Umgebungsluft - abgegeben wird. Der Umlauf des Kühlmittels ist beim Thermosiphon ein natürlicher Umlauf, welcher keine zusätzlichen Pumpmittel oder dergleichen erfordert. Darum ist ein erfindungsgemäßes Lagerbeckenkühlmodul auch völlig autark, benötigt also keine Energieversorgung oder sonstige Zu-, Steuer- oder Versorgungsleitungen. Es ist lediglich in das Kühlbecken einzubringen und entfaltet dort seine Kühlwirkung. Es ist allerdings gegebenenfalls dafür zu sorgen, dass die Umgebungsluft, welche das Lagerbecken umgibt, ihrerseits ausgetauscht wird. Ein Thermosiphon weist einen Verdampferbereich auf, welcher der Wärmeaufnahme dient. Deshalb ist bei der Auswahl und Anordnung des wenigstens einen Schwimmkörpers darauf zu achten, dass der Verdampferbereich im schwimmenden Zustand des Lagerbeckenkühlmoduls unterhalb der Wasseroberfläche liegt, weil das Wasser ja gekühlt werden soll. Entsprechend muss der Kondensatorbereich im schwimmenden Zustand des Lagerbeckenkühlmoduls oberhalb der Wasseroberfläche befindlich sein, um eine Wärmeabgabe an die Umgebung zu gewährleisten. Zur Erreichung einer stabilen Schwimmlage ist entweder eine relativ große Grundfläche zu wählen, so dass ein Kippen dadurch verhindert ist oder der Schwerpunkt des Lagerbeckenkühlmoduls ist - gegebenenfalls durch den Einsatz von Zusatzgewichten beziehungsweise Gewichtselementen - unterhalb der Wasseroberfläche zu verlagern.

Auf diese Weise ist in vorteilhafter Weise ermöglicht, im Notfall eine zusätzliche Kühlleistung in ein Lagerbecken einzubringen. Die erfindungsgemäßen Lagerbeckenkühlmodule können hierbei sowohl vor Ort vorgehalten werden oder aber auch bedarfsweise von einem zentralen Lager zum Einsatzort transportiert werden.

Entsprechend des erfindungsgemäßen Lagerbeckenkühlmoduls ist eine Basisplatte vorgesehen, welche mit dem Thermosiphon verbunden ist und durch welche wenigstens eine strömungstechnische Verbindung zwischen dem wenigstens einen Verdampfer und dem wenigstens einen Kondensator geführt ist.

Die Basisplatte dient hierbei als zentrales verbindendes Bauelement des Lagerbeckenkühlmoduls, welches dessen Grundstruktur bestimmt. An diesem sind sowohl der Thermosiphon als auch der wenigstens eine Schwimmkörper befestigt. Typischerweise ist der wenigstens eine Schwimmkörper im schwimmenden Zustand des Lagerbeckenkühlmoduls unterhalb der Basisplatte befindlich, so dass die Basisplatte sicher aufliegt. Die Basisplatte ist beispielsweise aus einem Metall, z.B. Edelstahl oder Aluminium, gefertigt. Durch die Führung der durch den Kühlkreislauf im Thermosiphon bedingten Verbindungen durch die Basisplatte ist einerseits eine vereinfachte Befestigung desselben ermöglicht, andererseits ist auch der Schwerpunkt des Lagerbeckenkühlmoduls mittiger, so dass sich eine stabilere Schwimmlage ergibt. Es ist aber durchaus auch möglich, die Verbindungsleitungen seitlich an der Basisplatte vorbeizuführen.

Es ist aber auch durchaus eine Anordnungsvariante möglich, bei der die Basisplatte unterhalb der Schwimmkörper angeordnet ist, so dass letztendlich sowohl Verdampfer als auch Kondensator oberhalb der Basisplatte angeordnet sind. Dies hat einerseits den Vorteil, dass dadurch der Schwerpunkt nach unten verlagert wird und dadurch eine stabilere Schwimmlage erreicht ist. Andererseits ist damit auch die thermisch bedingte Wasserzirkulation um den Verdampferbereich eingeschränkt, was sich negativ auf die Kühlleistung auswirkt.

Entsprechend einer bevorzugten Ausgestaltungsform des Lagerbeckenkühlmoduls sind wenigstens drei separate Schwimmkörper vorgesehen, welche die Basisplatte im schwimmenden Zustand tragen. Bei Einsatz von drei Schwimmkörpern sind diese idealerweise in einem gleichseitigen Dreieck angeordnet und bei vier Schwimmkörpern im Quadrat, so dass sich jeweils eine möglichst kippsichere und stabile Schwimmlage ergibt. Wie zuvor erwähnt, kann die Basisplatte prinzipiell auch unterhalb der Schwimmkörper angeordnet sein.

Gemäß einer weiteren Variante des erfindungsgemäßen Lagerbeckenkühlmoduls ist ein ringähnlicher Schwimmkörper vorgesehen, welcher auf den Grundriss der Basisplatte angepasst ist und diese im schwimmenden Zustand trägt. Der wenigstens eine Verdampfer und Kondensator sind dann typischerweise zentrisch unter- beziehungsweise oberhalb der Öffnung des ringähnlichen Schwimmkörpers angeordnet. Damit ist auch der Gewichtsschwerpunkt mittig, was insgesamt zu einer stabilen Schwimmlage führt.

Einer besonders bevorzugten Ausgestaltungsvariante des erfindungsgemäßen Lagerbeckenkühlmoduls folgend ist der wenigstens eine Thermosiphon durch ein Siedekondensationsrohr gebildet. Ein Siedekondensationsrohr ist ein Thermosiphon, dessen äußere Form einem einzigen Rohr entspricht, beispielsweise mit einem Durchmesser von einigen Zentimetern. Der geschlossene Kühlkreislauf für das Kühlmittel innerhalb eines solchen Siedekondensationsrohres ist durch entsprechende Führungen innerhalb des Rohres selbst realisiert. Derartige Rohre bieten den Vorteil einer sehr einfach einsetzbaren geometrischen äußeren Form bei sehr hoher Außenfläche, durch welche ein Wärmetausch begünstigt wird. Der Einsatz derartiger Siedekondensationsrohre vereinfacht den Aufbau eines Lagerbeckenkühlmoduls. So ist es beispielsweise möglich, ein Siedekondensationsrohr durch eine im Durchmesser angepasste Bohrung durch die Basisplatte entsprechend mit dem Lagerbeckenkühlmodul zu verbinden. Vorzugsweise zur Wahrung des Schwerpunktes verläuft das Siedekondensationsrohr im schwimmenden Zustand des Lagerbeckenkühlmoduls in etwa senkrecht zur Wasseroberfläche. Im unteren Bereich eines Siedekondensationsrohres ist dessen Verdampferbereich, in welchem das Kühlmittel in einem Verdampfungsprozess vom flüssigen in den gasförmigen Zustand übergeht und dabei Wärmeenergie aufnimmt. Im oberen Bereich eines Siedekondensationsrohres kondensiert das Kühlmittel wieder in den flüssigen Zustand und gibt dabei Wärmeenergie ab.

Eine weiterhin bevorzugte Ausgestaltungsvariante ist dadurch gekennzeichnet, dass eine Vielzahl von parallel angeordneten Siedekondensationsrohren vorgesehen ist, beispielsweise zwischen 50 und 400. Hierdurch kann die Kühlleistung auf einfache Weise und in einem kompakten räumlichen Bereich gesteigert werden. Der Abstand der Siedekondensationsrohre zueinander ist unter Berücksichtigung von deren Durchmesser derart zu wählen, dass eine Zirkulation des zu kühlenden Wassers an deren Außenoberfläche gewährleistet ist. In bevorzugter Weise ist die Vielzahl von parallel angeordneten Siedekondensationsrohren entsprechend einem matrixähnlichen Grundriss angeordnet. Dies erweist sich fertigungs- und auch strömungstechnisch als besonders günstig.

Gegebenenfalls sind erfindungsgemäß weitere Haltekonstruktionen vorgesehen, um die Siedekondensationsrohre beispielsweise an einem ihrer beiden Enden gegeneinander zu fixieren. Dies kann beispielsweise ein rasterähnliches Gitter sein, durch welches die Parallelität der Siedekondensationsrohre gewährleistet ist, an deren oberen Ende es angeordnet ist.

Erfindungsgemäß ist es in einer Variante auch vorgesehen, dass die Siedekondensationsrohre an ihren unteren und/oder oberen Enden strömungstechnisch miteinander verbunden sind. Hierdurch arbeiten mehrere Siedekondensationsrohre als gemeinsamer Thermosiphon. Dies hat beispielsweise wartungstechnische Vorteile bezüglich eines Austausches des Kühlmediums zur Folge.

Zum Erreichen einer weiter stabilisierten Schwimmlage ist es gemäß einer weiteren Variante vorgesehen, dass bei schwimmender Ausrichtung des Lagerbeckenkühlmoduls in dessen unterem Bereich Gewichtselemente angeordnet sind, durch welche dessen Schwimmverhalten aufgrund einer Schwerpunktsverlagerung nach unten weiter stabilisiert wird.

Erfindungsgemäß ist einer weiteren Variante folgend wenigstens ein Ventilator zur Erhöhung der Luftzirkulation um den wenigstens einen Kondensator vorgesehen. Hierdurch wird die Wärmeabgabe des Kondensators an die Umgebungsluft begünstigt und die Kühlleistung dadurch in vorteilhafter Weise gesteigert. Als besonders für ein erfindungsgemäßes Kühlmodul geeignet erwiesen hat sich das Kühlmittel R134a.

Erfindungsgemäß ist einer weiteren Variante folgend eine optimierte Strömungsführung, beispielsweise durch einen Kamin, zur Erhöhung der Luftzirkulation um den wenigstens einen Kondensator vorgesehen. Hierdurch wird die Wärmeabgabe des Kondensators an die Umgebungsluft begünstigt und die Kühlleistung dadurch in vorteilhafter Weise gesteigert.

Optional sind erfindungsgemäß Fördermittel vorgesehen, um den Kühlmittelumlauf im wenigstens einen Thermosiphon zu unterstützten. Dies bedingt - ähnlich wie der Einsatz eines Ventilators oder einer ähnlichen Luftfördereinrichtung - jedoch eine Energieversorgung des Lagerbeckenkühlmoduls. Dies bedeutet einen zusätzlichen Aufwand, welcher in einer extremen Notsituation jedoch gerechtfertigt ist, um die Kühlleistung nochmals zu steigern.

Zur vereinfachten Handhabung des Lagerbeckenkühlmoduls sind derart ausgestaltete Halteösen vorgesehen, dass es bedarfsweise an diesen in ein Lagerbecken abseilbar ist. Dies kann beispielsweise mit einem Hallenkran oder, falls das Reaktorgebäude beschädigt sein sollte, auch mittels eines Hubschraubers erfolgen.

Weitere vorteilhafte Ausgestaltungsmöglichkeiten sind den weiteren abhängigen Ansprüchen zu entnehmen.

Anhand der in den Zeichnungen dargestellten Ausführungsbeispiele sollen die Erfindung, weitere Ausführungsformen und weitere Vorteile näher beschrieben werden.

Es zeigen
- Fig. 1: eine Draufsicht auf ein erstes exemplarisches Lagerbeckenkühlmodul,
- Fig. 2: eine Seitenansicht auf ein zweites exemplarisches Lagerbeckenkühlmodul und
- Fig. 3: einen exemplarischen Thermosiphon.

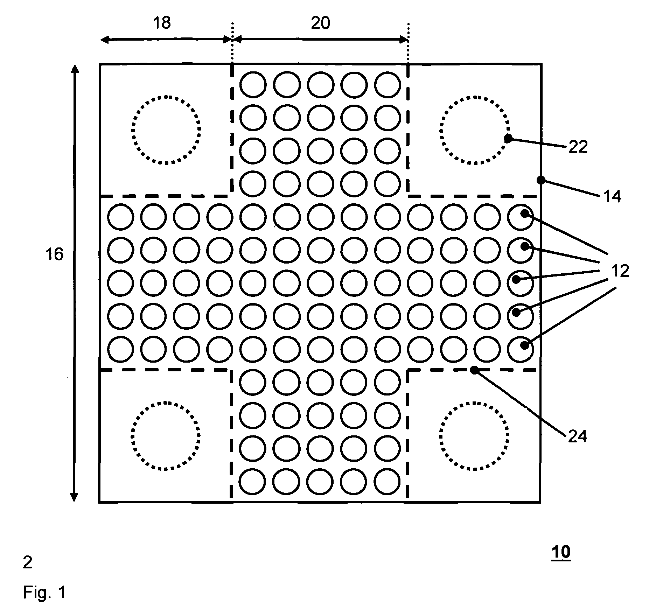

Fig. 1 zeigt eine Draufsicht auf ein erstes exemplarisches Lagerbeckenkühlmodul 10, dessen zentrales Element eine Basisplatte 14 bildet. Diese ist in diesem Beispiel aus einer 5cm dicken Aluminiumplatte gefertigt und weist bei einem quadratischen Grundriss eine Breite 16 von 2,5m auf. In ihren vier Eckbereichen sind jeweils quadratische Flächen mit einer Breite 18 von 0,75m freigehalten, unter denen jeweils Schwimmkörper 24 mit derselben Breite 18, also 0,75m, angeordnet sind. Durch diese Anordnung ist das Lagerbeckenkühlmodul 10 kippsicher schwimmfähig.

In dem verbleibenden Bereich der Basisplatte 14, welcher eine in etwa kreuzförmige Form mit einer Breite 20 von etwa 1 m aufweist, sind mit matrixähnlichen Grundriss Bohrungen vorgesehen. Durch diese Bohrungen ist eine Vielzahl an Siedekondensationsrohren 12 gleichen Durchmessers geführt und befestigt. Diese ragen, wie aus dieser Zeichnung allerdings nicht ersichtlich, ca. 1 m unterhalb und 2,5m oberhalb der Basisplatte 12. In dem Bereich, in welchem die Schwimmkörper 24 vorgesehen sind, sind dementsprechend keine Siedekondensationsrohre 12 vorgesehen. Die vier entsprechenden Flächen auf der Basisplatte sind in diesem Beispiel durch darauf angeordnete Ventilatoren 22 beziehungsweise andere Luftfördervorrichtungen genutzt, welche für eine verstärkte Luftzirkulation um den oberhalb der Basisplatte 14 befindlichen Kondensationsbereich der Siedekondensationsrohre 12 sorgen. Der Einsatz der rohrförmigen Siedekondensationsrohre 12 vereinfacht den mechanischen Aufbau des erfindungsgemäßen Lagerbeckenkühlmoduls 10.

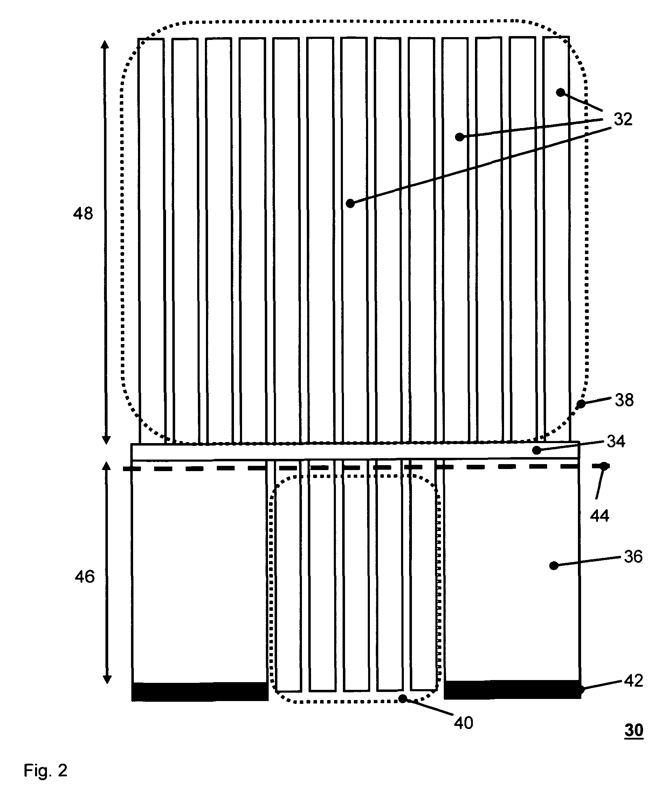

Fig. 2 zeigt eine Seitenansicht auf ein zweites exemplarisches Lagerbeckenkühlmodul 30, welches dem zuvor beschriebenen in etwa entspricht. Dieses ist schwimmend im Wasser angedeutet, wobei die Wasseroberfläche mit der Bezugsziffer 44 gekennzeichnet ist.

Eine Basisplatte 34 stellt ein zentrales Bauelement des erfindungsgemäßen Lagerbeckenkühlmoduls 30 dar. Unter diesem sind in den vier Eckbereichen jeweilige Schwimmkörper 36 angeordnet, beispielsweise Hohlkörper aus einem Kunststoffmaterial oder aber auch Vollkörper aus einem Material mit einer deutlich geringeren Dichte als Wasser. Diese weisen eine Kantenbreite von jeweils 0,75m bei einer Höhe 46 von 1 m auf. Je nach spezifischer Dichte des jeweiligen Schwimmkörpers 36 und zu tragendem Gewicht kann die Höhe eines derartigen Schwimmkörpers 36 aber auch durchaus 2,5m und mehr betragen. Zur weiteren Stabilisierung der Schwimmlage des Lagerbeckenkühlmoduls 30 sind im unteren Bereich der Schwimmkörper 36 Gewichtselemente 42 vorgesehen, durch welche der Schwerpunkt nach unten verlagert wird.

Durch entsprechende Bohrungen in der Basisplatte 44 geführt ist eine Vielzahl an parallelen Siedekondensationsrohren 32, welche in ihrem unteren Bereich etwa 1 m in das Wasser ragen, wo auch deren jeweiliger Verdampferbereich 40 gebildet ist, innerhalb dessen ein Wärmeenergieübertrag aus dem Kühlwasser erfolgt. Diese Wärmeenergie wird durch einen natürlichen Umlauf des Kühlmittels innerhalb der Siedekondensationsrohre in einen oberen Kondensationsbereich 38 transportiert und dort durch Kondensation des Kühlmittels an die Umgebung abgegeben. Die Höhe des Kondensationsbereiches 38, die in etwa der aus dem Wasser ragenden Länge der Siedekondensationsrohre 32 entspricht, ist mit der Bezugsziffer 48 angedeutet und beträgt etwa 2,5m, womit sich die Länge eines jeweiligen Siedekondensationsrohres 32 in etwa zu 3,5m ergibt. Wegen des besseren Wärmeübergangs in einer Flüssigkeit wie Wasser im Vergleich zu Luft ist der unter Wasser befindliche Verdampferbereich 40 entsprechend kürzer als der Kondensationsbereich 38 oberhalb der Wasseroberfläche 44.

Im oberen und mittleren Bereich des Kondensationsbereiches 38 sind nicht gezeigte gitterähnliche Halteelemente vorgesehen, welche den horizontalen Abstand zwischen den Siedekondensationsrohren 32 fixieren.

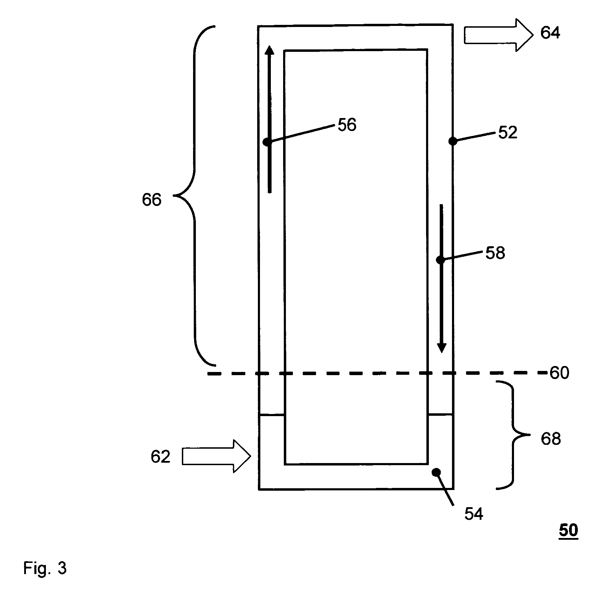

Fig. 3 zeigt einen exemplarischen Thermosiphon 50 in einem schematischen Prinzipschaltbild. In einem geschlossenen Rohrkreislauf 52 ist ein Kühlmittel, beispielsweise R134a, eingefüllt, welches im unteren Bereich des Rohrsystems 52 im flüssigen Zustand 54 gesammelt ist. Der geschlossene Rohrkreislauf ist in seinem unteren Bereich unterhalb einer Wasseroberfläche 60 befindlich, wodurch die Position eines Thermosiphons innerhalb eines schwimmenden erfindungsgemäßen Lagerbeckenkühlmoduls angedeutet sein soll. Der unter Wasser befindliche Bereich ist der Verdampferbereich 68, in welchem ein Wärmeeintrag 62 aus dem Wasser in den Thermosiphon 50 erfolgt. Dadurch beginnt das flüssige Kühlmittel zu sieden, entzieht dem Wasser Wärmeenergie und steigt in gasförmiger Form in Pfeilrichtung 56 in den oberen Kondensationsbereich 66 des Thermosiphons 50 auf. Dort kondensiert das Kühlmittel unter Wärmeabgabe 64 an die Umgebung wieder und tropft in Pfeilrichtung 58 wieder zurück in den Verdampferbereich des Thermosiphons. Aufgrund des natürlichen Kühlmittelumlaufs sind in vorteilhafter Weise keine Fördermittel notewendig.

### Bezugszeichenliste

- 10: Draufsicht auf erstes exemplarisches Lagerbeckenkühlmodul
- 12: Siedekondensationsrohre
- 14: Basisplatte
- 16: Breite exemplarisches Lagerbeckenkühlmodul
- 18: Breite Schwimmkörper
- 20: Breite zwischen Schwimmkörpern
- 22: Ventilator
- 24: Schwimmkörper
- 30: Seitenansicht auf zweites exemplarisches Lagerbeckenkühlmodul
- 32: Siedekondensationsrohre
- 34: Basisplatte
- 36: Schwimmkörper
- 38: Kondensationsbereich der Siedekondensationsrohre
- 40: Verdampferbereich der Siedekondensationsrohre
- 42: Gewichtselement
- 44: Wasseroberfläche
- 46: Höhe Schwimmkörper
- 48: Höhe Kondensationsbereich
- 50: exemplarischer Thermosiphon
- 52: geschlossener Rohrkreislauf
- 54: flüssiges Kühlmittel
- 56: Umlaufrichtung verdampftes Kühlmittel
- 58: Rücklaufrichtung kondensiertes Kühlmittel
- 60: Wasseroberfläche
- 62: Wärmeeintrag in Verdampfer
- 64: Wärmeabgabe aus Kondensator
- 66: Kondensationsbereich
- 68: Verdampferbereich

## Patentansprüche

1. Lagerbeckenkühlmodul (10, 30), umfassend wenigstens einen Thermosiphon (12, 32, 50) mit einem Verdampfer (40, 68) und einem Kondensator (38, 66), wobei dieses weiterhin wenigstens einen fest mit dem wenigstens einen Thermosiphon verbundenen Schwimmkörper (24, 36) umfasst, welcher unterhalb des Kondensators (48, 66) angeordnet und derart ausgestaltet ist, dass das Lagerbeckenkühlmodul (10, 30) in Wasser schwimmfähig ist, wobei der Verdampfer (40, 68) dann unterhalb der Wasseroberfläche (44, 60) und der Kondensator (38, 66) oberhalb der Wasseroberfläche (44, 60) befindlich ist,
**dadurch gekennzeichnet,**
**dass** das Lagerbeckenkühlmodul eine Basisplatte (14, 34) enthält unter welcher der wenigstens eine Schwimmkörper angeordnet ist, welche mit dem Thermosiphon (12, 32, 50) verbunden ist und durch welche wenigstens eine strömungstechnische Verbindung zwischen dem wenigstens einen Verdampfer (40, 68) und dem wenigstens einen Kondensator (38, 66) geführt ist.

2. Lagerbeckenkühlmodul nach Anspruch 1, **dadurch gekennzeichnet, dass** wenigstens drei separate Schwimmkörper (24, 36) enthalten sind, welche die Basisplatte (14, 34) im schwimmenden Zustand tragen.

3. Lagerbeckenkühlmodul nach Anspruch 1, **dadurch gekennzeichnet, dass** ein ringähnlicher Schwimmkörper enthalten ist, welcher an den Grundriss der Basisplatte (14, 34) angepasst ist und diese im schwimmenden Zustand trägt.

4. Lagerbeckenkühlmodul nach einem der vorherigen Ansprüche, **dadurch gekennzeichnet, dass** der wenigstens eine Thermosiphon (12, 32, 50) durch ein Siedekondensationsrohr (12, 32) gebildet ist.

5. Lagerbeckenkühlmodul nach Anspruch 4, **dadurch gekennzeichnet, dass** eine Vielzahl von parallel angeordneten Siedekondensationsrohren (12, 32) enthalten ist.

6. Lagerbeckenkühlmodul nach Anspruch 5, **dadurch gekennzeichnet, dass** die Vielzahl von parallel angeordneten Siedekondensationsrohren (12, 32) entsprechend einem matrixähnlichen Grundriss angeordnet sind.

7. Lagerbeckenkühlmodul nach einem der Ansprüche 5 oder 6, **dadurch gekennzeichnet, dass** eine Haltevorrichtung zur Fixierung der Siedekondensationsrohre (12, 32) enthalten ist.

8. Lagerbeckenkühlmodul nach einem der Ansprüche 5 bis 7, **dadurch gekennzeichnet, dass** die Siedekondensationsrohre (12, 32) an ihren unteren und/oder oberen Enden strömungstechnisch miteinander verbunden sind.

9. Lagerbeckenkühlmodul nach einem der vorherigen Ansprüche, **dadurch gekennzeichnet, dass** bei schwimmender Ausrichtung des Lagerbeckenkühlmoduls in dessen unterem Bereich Gewichtselemente (42) enthalten sind, durch welche dessen Schwimmverhalten stabilisiert wird.

10. Lagerbeckenkühlmodul nach einem der vorherigen Ansprüche, **dadurch gekennzeichnet, dass** wenigstens ein Ventilator (22) zur Erhöhung der Luftzirkulation um den wenigstens einen Kondensator (38, 66) enthalten ist.

11. Lagerbeckenkühlmodul nach einem der vorherigen Ansprüche, **dadurch gekennzeichnet, dass** als Kühlmittel (54) für den wenigstens einen Thermosiphon (12, 32, 50) R134a verwendet ist.

12. Lagerbeckenkühlmodul nach einem der vorherigen Ansprüche, **dadurch gekennzeichnet, dass** zur Erhöhung der Luftzirkulation um den wenigstens einen Kondensator ein diesen umgebender Kamin enthalten ist.

13. Lagerbeckenkühlmodul nach einem der vorherigen Ansprüche, **dadurch gekennzeichnet, dass** Fördermittel enthalten sind, um den Kühlmittelumlauf (56, 58) im wenigstens einen Thermosiphon (12, 32, 50) zu unterstützten.

14. Lagerbeckenkühlmodul nach einem der vorherigen Ansprüche, **dadurch gekennzeichnet, dass** derart ausgestaltete Halteösen enthalten sind, dass es bedarfsweise an diesen in ein Lagerbecken abseilbar ist.

## Claims

1. Storage pool cooling module (10, 30), comprising at least one thermosiphon (12, 32, 50) having an evaporator (40, 68) and a condenser (38, 66), further comprising at least one floating body (24, 36) which is firmly connected to the at least one thermosiphon, is arranged underneath the condenser (48, 66) and is configured in such a way that the storage pool cooling module (10, 30) is buoyant in water, the evaporator (40, 68) then being located underneath the water surface (44, 60) and the condenser (38, 66) above the water surface (44, 60),
**characterized in that**
the storage pool cooling module contains a base plate (14, 34), under which the at least one floating body is arranged, which is connected to the thermosiphon (12, 32, 50) and through which at least one fluidic connection between the at least one evaporator (40, 68) and the at least one condenser (38, 66) is led.

2. Storage pool cooling module according to Claim 1, **characterized in that** at least three separate floating bodies (24, 36) are included, which carry the base plate (14, 34) in the floating state.

3. Storage pool cooling module according to Claim 1, **characterized in that** a floating body similar to a ring is included, is matched to the outline of the base plate (14, 34) and carries the latter in the floating state.

4. Storage pool cooling module according to one of the preceding claims, **characterized in that** the at least one thermosiphon (12, 32, 50) is formed by a boiling condensation pipe (12, 32).

5. Storage pool cooling module according to Claim 4, **characterized in that** a plurality of boiling condensation pipes (12, 32) arranged in parallel are included.

6. Storage pool cooling module according to Claim 5, **characterized in that** the plurality of boiling condensation pipes (12, 32) arranged in parallel are arranged in accordance with a matrix-like outline.

7. Storage pool cooling module according to either of Claims 5 and 6, **characterized in that** a holding device for fixing the boiling condensation pipes (12, 32) is included.

8. Storage pool cooling module according to one of Claims 5 to 7, **characterized in that** the boiling condensation pipes (12, 32) are connected to one another fluidically at their lower and/or upper ends.

9. Storage pool cooling module according to one of the preceding claims, **characterized in that**, with a floating orientation of the storage pool cooling module, weight elements (42), by means of which its floating behaviour is stabilized, are included in its lower region.

10. Storage pool cooling module according to one of the preceding claims, **characterized in that** at least one fan (22) for increasing the air circulation around the at least one condenser (38, 66) is included.

11. Storage pool cooling module according to one of the preceding claims, **characterized in that** the coolant (54) used for the at least one thermosiphon (12, 32, 50) is R134a.

12. Storage pool cooling module according to one of the preceding claims, **characterized in that**, in order to increase the air circulation around the at least one condenser, a chimney surrounding the latter is included.

13. Storage pool cooling module according to one of the preceding claims, **characterized in that** conveying means are included in order to support the coolant circulation (56, 58) in the at least one thermosiphon (12, 32, 50).

14. Storage pool cooling module according to one of the preceding claims, **characterized in that** retaining eyes are included, which are configured in such a way that, by using these, the said module can be lowered into a storage pool as necessary.

## Revendications

1. Module de refroidissement de bassin de stockage (10, 30), comprenant au moins un thermosiphon (12, 32, 50) avec un évaporateur (40, 68) et un condenseur (38, 66), celui-ci comprenant en outre au moins un corps flottant (24, 36) connecté fixement à l'au moins un thermosiphon, lequel est disposé sous le condenseur (48, 66) et est configuré de telle sorte que le module de refroidissement de bassin de stockage (10, 30) puisse flotter dans l'eau, l'évaporateur (40, 68) se trouvant alors en dessous de la surface de l'eau (44, 60) et le condenseur (38, 66) se trouvant au-dessus de la surface de l'eau (44, 60),
**caractérisé en ce que**
le module de refroidissement de bassin de stockage comprend une plaque de base (14, 34) sous laquelle est disposé l'au moins un corps flottant, qui est connecté au thermosiphon (12, 32, 50) et par laquelle au moins une liaison technique d'écoulement est guidée entre l'au moins un évaporateur (40, 68) et l'au moins un condenseur (38, 66).

2. Module de refroidissement de bassin de stockage selon la revendication 1, **caractérisé en ce qu'**au moins trois corps flottants séparés (24, 36) sont contenus, lesquels portent la plaque de base (14, 34) dans l'état flottant.

3. Module de refroidissement de bassin de stockage selon la revendication 1, **caractérisé en ce qu'**un corps flottant similaire à un anneau est contenu, lequel est adapté au profil de base de la plaque de base (14, 34) et porte celle-ci à l'état flottant.

4. Module de refroidissement de bassin de stockage selon l'une quelconque des revendications précédentes, **caractérisé en ce que** l'au moins un thermosiphon (12, 32, 50) est formé par un tube de condensation d'ébullition (12, 32).

5. Module de refroidissement de bassin de stockage selon la revendication 4, **caractérisé en ce qu'**une pluralité de tubes de condensation d'ébullition disposés en parallèle (12, 32) sont contenus.

6. Module de refroidissement de bassin de stockage selon la revendication 5, **caractérisé en ce que** la pluralité de tubes de condensation d'ébullition disposés en parallèle (12, 32) sont disposés suivants un profil de base similaire à une matrice.

7. Module de refroidissement de bassin de stockage selon l'une quelconque des revendications 5 ou 6, **caractérisé en ce qu'**un dispositif de retenue pour la fixation des tubes de condensation d'ébullition (12, 32) est contenu.

8. Module de refroidissement de bassin de stockage selon l'une quelconque des revendications 5 à 7, **caractérisé en ce que** les tubes de condensation d'ébullition (12, 32) sont connectés les uns aux autres au niveau de leurs extrémités inférieures et/ou supérieures par une technique d'écoulement.

9. Module de refroidissement de bassin de stockage selon l'une quelconque des revendications précédentes, **caractérisé en ce que** lorsque le module de refroidissement de bassin de stockage est orienté de manière flottante, des éléments de poids (42) sont contenus dans sa région inférieure, lesquels permettent de stabiliser son comportement de flottaison.

10. Module de refroidissement de bassin de stockage selon l'une quelconque des revendications précédentes, **caractérisé en ce qu'**au moins un ventilateur (22) pour augmenter la circulation d'air est contenu autour de l'au moins un condenseur (38, 66).

11. Module de refroidissement de bassin de stockage selon l'une quelconque des revendications précédentes, **caractérisé en ce que** l'on utilise en tant que fluide de refroidissement (54) pour l'au moins un thermosiphon (12, 32, 50) du R134a.

12. Module de refroidissement de bassin de stockage selon l'une quelconque des revendications précédentes, **caractérisé en ce que** pour augmenter la circulation d'air autour de l'au moins un condenseur, une cheminée entourant celui-ci est contenue.

13. Module de refroidissement de bassin de stockage selon l'une quelconque des revendications précédentes, **caractérisé en ce que** des moyens de transport sont contenus, afin de supporter la circulation du fluide de refroidissement (56, 58) dans au moins un thermosiphon (12, 32, 50).

14. Module de refroidissement de bassin de stockage selon l'une quelconque des revendications précédentes, **caractérisé en ce que** des oeillets d'arrimage sont configurés de telle sorte que l'on puisse descendre en rappel au besoin avec ceux-ci dans un bassin de stockage.
